(19)

Europäisches Patentamt
European Patent Office
Office européen des brevets

(11) **EP 2 224 313 B1**

(12) **EUROPEAN PATENT SPECIFICATION**

(45) Date of publication and mention
of the grant of the patent:
**05.12.2012 Bulletin 2012/49**

(51) Int Cl.:
**G06F 3/041** (2006.01)

(21) Application number: **09154032.8**

(22) Date of filing: **27.02.2009**

(54) **Touch-sensitive display including a force-sensor and portable electronic device including same**

Berührungsempfindliche Anzeige mit einem Kraftsensor und tragbare elektronische Vorrichtung damit

Dispositif d'affichage tactile sensible au toucher incluant un capteur de force et dispositif électronique portable l'incluant

(84) Designated Contracting States:
**AT BE BG CH CY CZ DE DK EE ES FI FR GB GR
HR HU IE IS IT LI LT LU LV MC MK MT NL NO PL
PT RO SE SI SK TR**

(43) Date of publication of application:
**01.09.2010 Bulletin 2010/35**

(73) Proprietor: **Research In Motion Limited
Waterloo, ON N2L 3W8 (CA)**

(72) Inventor: **Ma, ZhongMing
Waterloo Ontario N2L 3W8 (CA)**

(74) Representative: **Fennell, Gareth Charles
Kilburn & Strode LLP
20 Red Lion Street
London WC1R 4PJ (GB)**

(56) References cited:
**EP-A- 0 099 430         WO-A-03/083635
US-A- 5 228 562         US-A- 5 719 597
US-A1- 2004 027 761     US-A1- 2006 279 548
US-A1- 2007 103 449**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

FIELD OF TECHNOLOGY

The present disclosure relates to touch-sensitive displays such as those included in a portable electronic device and the determination of externally applied forces on the touch-sensitive display.

BACKGROUND

Electronic devices, including portable electronic devices, have gained widespread use and may provide a variety of functions including, for example, telephonic, electronic messaging and other personal information manager (PIM) application functions. Portable electronic devices include several types of devices including mobile stations such as simple cellular telephones, smart telephones, wireless PDAs, and laptop computers with wireless 802.11 or Bluetooth capabilities.

Devices such as PDAs or smart telephones are generally intended for handheld use and ease of portability. Smaller devices are generally desirable for portability. Touch screen displays constructed of a display, such as a liquid crystal display, with a touch-sensitive overlay are useful on such handheld devices as these handheld devices are small and are therefore limited in space available for user input and output devices. Further, the screen content on the touch screen devices may be modified depending on the functions and operations being performed. Touch screen devices that provide tactile feedback are particularly advantageous for providing positive feedback upon selection of a feature on the touch screen.

US 2006/279548 describes a touch location determination approach that involves using a plurality of touch location techniques. Each touch location technique is capable of independently determining a location of a touch within a touch area of the touch sensitive device. The touch location determination made by at least one touch location technique is enhanced using touch location information associated with the touch acquired from one or more other touch location techniques. One touch location technique may use a different type of sensor, signal, and/or algorithm from the one or more other touch location techniques.

WO 03/083635 describes a touch panel which has a touch panel portion and a display panel portion. The touch panel portion includes an upper and a lower substrate arranged opposite to each other, and transparent electrodes formed on the facing surfaces of the upper and lower substrates. The lower substrate of the touch panel portion and a front surface portion of the display panel portion are bonded to each other by a pressure sensitive adhesive layer.

An improved touch screen display is desirable.

## SUMMARY

In one aspect, the present application may provide a touch screen display comprising: a display; a touch-sensitive overlay disposed on the display and a controller operably coupled to the touch-sensitive overlay; and a force sensor disposed between the display and the touch-sensitive overlay and extending along a periphery of the touch-sensitive overlay to provide a seal between the overlay and the display and arranged and constructed to determine a value of an applied force to the touch-sensitive overlay.

In another aspect the present invention may provide a touch screen display comprising: a display; a touch-sensitive overlay disposed on the display and a controller operably coupled to the touch-sensitive overlay; a plurality of force sensors comprising a substrate between the display and the touch-sensitive overlay, wherein adhesive and the substrate extend continuously around a periphery of the touch-sensitive overlay to provide a seal between the touch-sensitive overlay and the display.

In another aspect, the present application may provide a portable electronic device comprising: a hosing; a touch screen display as described in the previous paragraph; and a memory and a processor operably coupled to the memory, and either of the touch screen displays described above.

The force sensor may be a pressure sensitive adhesive and may include a pressure-sensitive material disposed between substrate layers and adhered to the overlay and the display. The substrate layers may be polyethylene terephthalate and the pressure-sensitive material may be a pressure-sensitive ink.

A plurality of force sensors may be disposed around a periphery of the touch-sensitive overlay. Four force sensors may be included, wherein each force sensor is disposed near each edge of the touch-sensitive overlay. The force sensor(s) may provide a seal between the overlay and the display.

A portable electronic device is provided that includes a housing and the touch screen display. Functional components are included in the housing and include memory and a processor operably connected to the memory and the touch screen display.

The portable electronic device may include a piezo actuator disposed between the touch screen display and a base of the portable electronic device for applying a force to the touch screen display in response a force on the touch screen display that exceeds a threshold force.

Advantageously, force sensors are included in the touch screen display. The touch-sensitive overlay may be used to determine the occurrence of a touch on the touch screen display while the force sensors may be used to distinguish, for example, an inadvertent touch from a push selection of a feature on the display. An electronic device, including the touch screen display, may be configured to provide tactile feedback when a threshold force (or pressure) is exceeded. The force sensors are thin and are included between the display and the overlay. A force sensor or force sensors in the form of pressure sensitive ink may be used between, for example, substrate layers such as polyethylene terephthalate. The force sensor is adhered between the two layers, providing adhesion of the two layers and may provide a seal between the two layers. The force sensor or sensors space the touch-sensitive overlay from the display, reducing deformation of the liquid crystal of the display from finger pressure on the touch-sensitive overlay and therefore reducing unwanted deformation of the rendered image.

## BRIEF DESCRIPTION OF THE DRAWINGS

Embodiments of the present disclosure are now be described, by way of example only, with reference to the attached figures, wherein:

Figure 1 is a simplified block diagram of components including internal components of a portable electronic device according an aspect of an embodiment;

Figure 2 is a front view of an example of a portable electronic device;

Figure 3A is a cross-sectional view of the portable electronic device of Figure 2;

Figure 3B is a cross-sectional view of the touch screen display of the portable electronic device of Figure 2;

Figure 3C is a cross-sectional view of a force sensor of the touch screen display of Figure 3B;

Figure 4 is a front view of an example of a portable electronic device;

Figures 5 is a functional block diagram showing a force sensor and an actuator of the portable electronic device;

Figure 6 is a flowchart illustrating a method of controlling a portable electronic device including a touch-sensitive display;

Figure 7 is a front view of an alternative embodiment of a portable electronic device; and

Figure 8 is a front view of another example of a portable electronic device.

## DESCRIPTION OF PREFERRED EMBODIMENT

For simplicity and clarity of illustration, reference numerals may be repeated among the figures to indicate corresponding or analogous elements. In addition, numerous specific details are set forth in order to provide a thorough understanding of the embodiments described herein. The embodiments described herein may be practiced without these specific details. In other instances, well-known methods, procedures and components have not been described in detail so as not to obscure the embodiments described herein. Also, the description is not to be considered as limiting the scope of the embodiments described herein.

The disclosure generally relates to an electronic device, which in the embodiments described herein, is a portable electronic device. Examples of portable electronic devices include mobile, or handheld, wireless communication devices such as pagers, cellular phones, cellular smartphones, wireless organizers, personal digital assistants, and wirelessly enabled notebook computers. The portable electronic device may also be a portable electronic device without wireless communication capabilities, such as a handheld electronic game device, digital photograph album, digital camera, or other device.

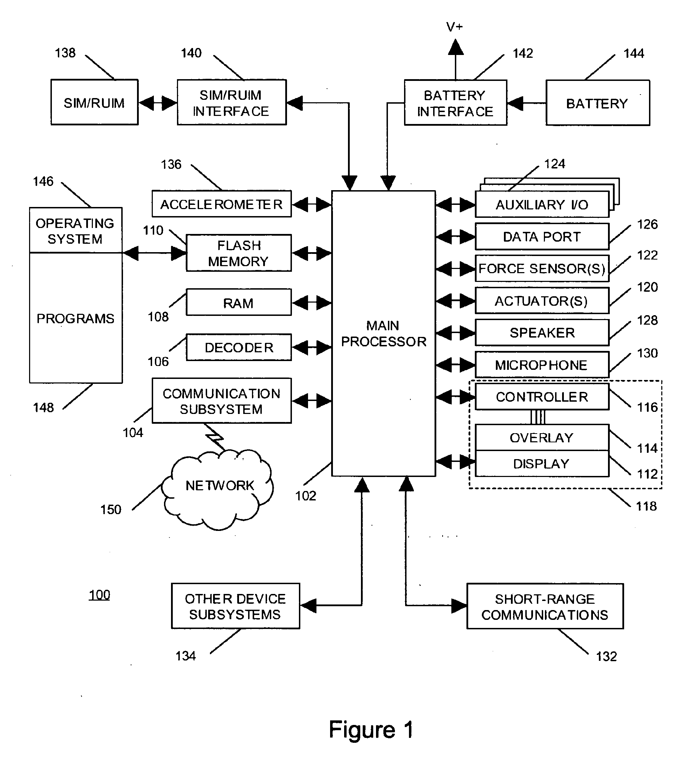

Referring to Figure 1, a block diagram of an example of an embodiment of a portable electronic device 100 is shown. The portable electronic device 100 includes a number of components such as a processor 102 that controls the overall operation of the portable electronic device 100. Communication functions, including data and voice communications, are performed through a communication subsystem 104. Data received by the portable electronic device 100 may be decompressed and decrypted by a decoder 106. The communication subsystem 104 receives messages from and transmits or sends messages to a wireless network 150.

The processor 102 also interacts with additional subsystems such as Random Access Memory (RAM) 108, a flash memory 110, a display 112 with a touch-sensitive overlay 114 connected to an electronic controller 116 that together make up a touch-screen display 118, an actuator 120, one or more force sensors 122, an auxiliary input/output (I/O) subsystem 124, a data port 126, a speaker 128, a microphone 130, short-range communications 132 and other device subsystems 134. The processor 102 interacts with the touch-sensitive overlay 114 via the electronic controller 116. The processor 102 also interacts with an accelerometer 136 as shown in Figure 1.

To identify a subscriber for network access according to the present embodiment, the portable electronic device 100 uses a Subscriber Identity Module (SIM) or a Removable User Identity Module (RUIM) card 138 inserted into a SIM/RUIM interface 140 for communication with a network such as the network 150. Alternatively, user identification information may be programmed into the flash memory 110.

The portable electronic device 100 is a battery-powered device and includes a battery interface 142 for receiving one or more rechargeable batteries 144.

The portable electronic device 100 also includes an operating system 146 and software components 148 that are executed by the processor 102 and are typically stored in a persistent store such as the flash memory 110. Additional applications may be loaded onto the portable electronic device 100 through the wireless network 150, the auxiliary I/O subsystem 124, the data port 126, the short-range communications subsystem 132, or any other suitable device subsystem 134.

In use, a received signal such as a text message, an e-mail message, or web page download is processed by the communication subsystem 104 and input to the processor 102. The processor 102 processes the received signal for output to the display 112 or alternatively to the auxiliary I/O subsystem 124. A subscriber may also compose data items, such as e-mail messages, for example, which may be transmitted over the wireless network 150 through the communication subsystem 104. For voice communications, the overall operation of the portable electronic device 100 is substantially similar, except that the received signals are output to the speaker 128 and signals for transmission are generated by the microphone 130.

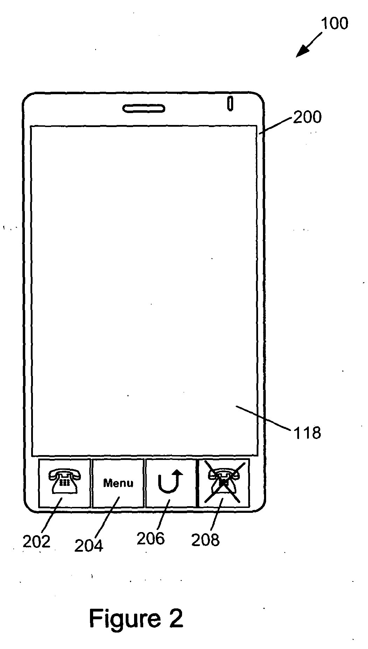

Reference is now made to Figure 2, which shows a front view of an example of a portable electronic device 100 in portrait orientation. The portable electronic device 100 includes a housing 200 that houses internal components, including internal components shown in Figure 1, and frames the touch screen display 118 such that the touch screen display 118 is exposed for user-interaction when the portable electronic device 100 is in use. The touch screen display 118 may include any suitable number of user-selectable features rendered thereon, for example, in the form of virtual buttons for user-selection of, for example, applications, options, or keys of a keyboard for user entry of data during operation of the portable electronic device 100.

The touch screen display 118 may be any suitable touch screen display such as a capacitive touch screen display. A capacitive touch screen display includes the display 112 and the touch-sensitive overlay 114, as shown in Figure 1, in the form of a capacitive touch-sensitive overlay that is an assembly of a number of layers in a stack and is fixed to the display 112 via a suitable optically clear adhesive. The layers include, for example a substrate fixed to the LCD display 112 by a suitable adhesive, a ground shield layer, a barrier layer, a pair of capacitive touch sensor layers separated by a substrate or other barrier layer, and a cover layer fixed to a second capacitive touch sensor layer by a suitable adhesive. The capacitive touch sensor layers may be any suitable material such as patterned indium tin oxide (ITO).

The X and Y (e.g., horizontal and vertical with respect to one's view of the display 112) location of a touch event are both determined. The X location is determined by a signal generated as a result of capacitive coupling with one of the touch sensor layers, and the Y location is determined by a signal generated as a result of capacitive coupling with the other of the touch sensor layers. Each of the touch-sensor layers provides a signal to the controller 116 as a result of capacitive coupling with a suitable object such as a finger of a user resulting in a change in the electric field of each of the touch sensor layers. The signals represent the respective X and Y touch location values. Other attributes of the user's touch on the touch screen display 118 may also be determined. For example, the size and the shape of the touch on the touch screen display 118 may be determined in addition to the location (X and Y values) based on the signals received at the controller 116 from the touch sensor layers.

Referring still to Figure 2, a user's touch on the touch screen display 118 is established by determining the X and Y touch location and user-selected input is determined based on the X and Y touch location and the application executed by the processor 102. Thus, a feature such as a virtual button displayed on the touch screen display 118 may be selected by matching the feature to the X and Y location of a touch event on the touch screen display 118. A feature selected by the user is determined based on the X and Y touch location and the application.

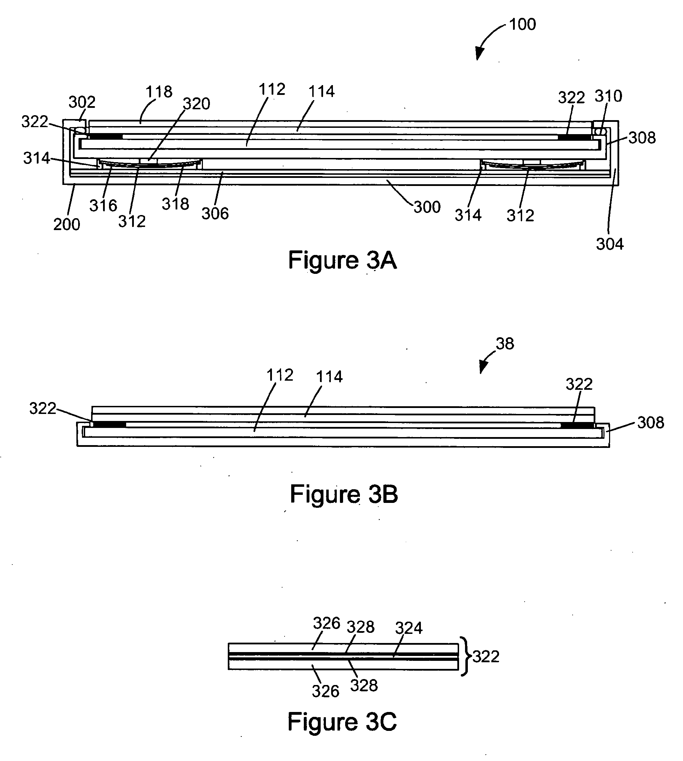

The housing 200 is suitable for housing the internal components shown in Figure 1. As best shown in Figure 3, the housing 200 in the present example includes a back 300, a frame 302, which frames the touch screen display 118, and sidewalls 304 that extend between and generally perpendicular to the back 300 and the frame 302. A base 306 is spaced from and is generally parallel to the back 300. The base 306 may be any suitable base such as a printed circuit board or flex circuit board supported by a stiff support between the base 306 and the back 300. The back 300 includes a plate (not shown) that is releasably attached for insertion and removal of, for example, the battery 144 and the SIM/RUIM card 138. The back 300, the sidewalls 304 and the frame 302 may be injection molded, for example. In the example of the portable electronic device 100 shown in the figures, the frame 302 is generally rectangular with rounded corners, although other shapes are possible.

The display 112 and the touch-sensitive overlay 114 are supported on a support tray 308 of suitable material, such as magnesium, for providing mechanical support to the display 112 and the touch-sensitive overlay 114. A compliant gasket 310 is located around the perimeter of the frame 302, between an upper portion of the support tray 308 and the frame 302 to protect the components housed in the housing 200 of the portable electronic device 100. A suitable material for the compliant gasket 310 includes, for example, a cellular urethane foam for providing shock absorption, vibration damping, and a suitable fatigue life. The touch screen display 118 is moveable within the housing 200 as the touch screen display 118 may be moved away from the base 306, thereby compressing the compliant gasket 310. Further, the touch screen display 118 may be moved toward the base 306, thereby applying a force to the piezo disk actuators 312 referred to below. Figure 3A shows the touch screen display 118, when no external force is applied. Figures 3A through 3C are not drawn to scale for the purpose of clarity of illustration of the force sensor 122.

Referring again to Figure 2, the portable electronic device 100 may also include physical buttons. In the present example, the portable electronic device 100 includes four physical buttons 202, 204, 206, 208 in the housing 200 for user-selection for performing functions or operations. Buttons for performing functions on the portable electronic device 100 may also be virtual features rendered on the touch screen display 118.

In the example shown in Figure 3A, the actuator 120 comprises four piezo disk actuators 312, with each piezo disk actuator 312 supported on a respective support ring 314. Each support ring 314 extends from the base 306 toward the touch screen display 118 for supporting the respective piezo disk actuator 312 while permitting flexing of the piezo disk actuator 312. Each piezo disk actuator 312 includes a piezoelectric disk 316 such as a piezoelectric (PZT) ceramic disk adhered to a metal substrate 318 of larger diameter than the piezoelectric disk 316 for bending when the piezoelectric disk 316 contracts as a result of build up of charge by the piezoelectric disk 316. Each piezo disk actuator 312 is supported on the respective support ring 314 on one side of the base 306, near a respective corner of the housing 200. The metal ring is sized such that the edge of the metal substrate 318 contacts the support ring 314 to support the piezo disk actuator 312 and facilitate flexing of the piezo disk actuator 312. A shock-absorbing element 320, which in the present example is in the form of a cylindrical shock-absorber of suitable material such as a hard rubber, is located between the piezo disk actuator 312 and the support tray 308. In the portable electronic device 100, each piezo disk actuator 312 is located between the base 306 and the support tray 308 and force is applied on each piezo disk actuator 312 by the touch screen display 118, in the direction of the base 306, causing bending of the piezo disk actuator 312. Thus, absent an external force applied by the user, for example by pressing on the touch screen display 118, and absent a charge on the piezo disk actuator 312, the piezo disk actuator 312 undergoes slight bending. An external applied force in the form of a user pressing on the touch screen display 118 during a touch event, and prior to actuation of the piezo disk actuator 312, causes increased bending of the piezo disk actuator 312 and the piezo disk actuator 312 applies a spring force against the touch screen display 118. When the piezoelectric disk 316 is charged, the piezoelectric disk 316 shrinks, causing the metal substrate 318 and piezoelectric disk 316 to apply a further force on the touch screen display 118, opposing the external applied force, as the piezo disk actuator 312 straightens.

The support rings 314 may be part of the base 306 or may be supported on the base 306. The base 306 may be a printed circuit board. The opposing side of the base 306 provides mechanical support and electrical connection for other components (not shown) of the portable electronic device 100. Each piezo disk actuator 312 is located between the base 306 and the support tray 308, such that the charging of the piezo disk actuators 312 causes a force on the touch screen display 118, away from the base 306. The charge on the piezo disk actuators 312 is adjusted to control the force applied by the piezo disk actuators 312 on the support tray 308 and the resulting movement of the touch screen display 118. The charge is adjusted by varying the applied voltage or current. For example, a current may be applied to increase the charge on the piezo disk actuators 312 to contract the piezoelectric disks 316 as described above, causing the metal substrate 318 and the piezoelectric disk 316 to straighten as referred to above. This charge therefore results in the force on the touch screen display 118 for opposing the external applied force and movement of the touch screen display 118 away from the base 306. The charge on the piezo disk actuator 312 may also be removed by a controlled discharge current causing the piezoelectric disk 316 to expand again, releasing the force caused by the electric charge and thereby decreasing the force on the touch screen display 118 applied by the piezo disk actuators 312.

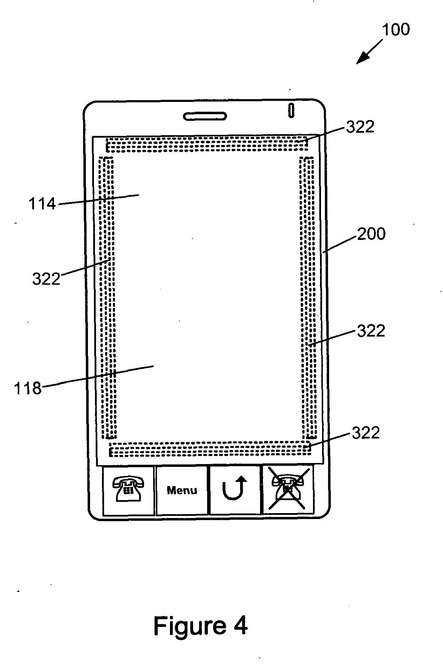

As indicated above, the touch screen display 118 includes the touch-sensitive overlay 114 and the display 112, and the processor 102 interacts with the touch-sensitive overlay 114 via the electronic controller 116. A plurality of force sensors 322 is disposed between the display 112 and the touch-sensitive overlay 114. In the present example, four force sensors 322 are included between the display 112 and the touch-sensitive overlay 114. Each force sensor 322 extends along a respective side, near a respective edge of the touch-sensitive overlay 114. Thus, the force sensors 322 extend around the periphery of the touch-sensitive overlay 114, such as shown in Figure 4.

Referring again to Figures 3B and 3C, each force sensor 322 is thin and is made of suitable material. In the present example, the force sensors 322 include a pressure-sensitive ink 324 disposed between substrate layers 326 of polyester or polyimide film such as polyethylene terephthalate, for example. The pressure-sensitive ink 324 is printed on a conductive material 328, such as silver disposed on the substrate layers 326, and the substrate layers 326 are adhered together to provide a thin force-sensing resistor. The thin force sensors 322 are adhered to both the touch-sensitive overlay 114 and the display 112, therefore adhering the touch-sensitive overlay 114 to the display 112. The force sensors 322 thereby provide a seal around the periphery of the touch-sensitive overlay 114, between the touch-sensitive overlay 114 and the display 112. Although the force sensors shown in Figure 4 are depicted as disjointed at the corners of the touch screen display 118, the substrate material and adhesive may be continuous to provide the seal between the display 112 and the touch-sensitive overlay 114.

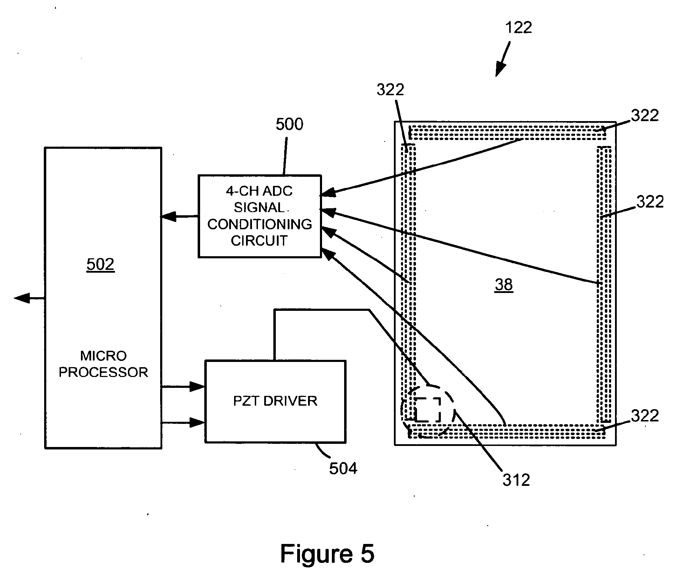

Figure 5 shows a functional block diagram of the force sensor 122, 322 and the actuator 120 according to one embodiment. In this example, each force sensor 322 is connected to a four-channel amplifier and analog-to-digital converter (ADC) 500 that is operably coupled to a microprocessor 502. The piezo disk actuators 312 are connected to a piezo driver 504 that communicates with the microprocessor 502. Only one of the piezo disk actuators 312 is shown so to not obscure other features of Figure 5, The microprocessor 502 is also in communication with the main processor 102 of the portable electronic device 100. The microprocessor 502 provides signals to the main processor 102 of the portable electronic device 100. The piezo driver 504 may optionally be embodied in drive circuitry between the microprocessor 502 and the piezo disk actuators 312.

As indicated above, the force sensors 322 act as force sensing resistors in an electrical circuit, therefore the resistance changes with force applied to the sensor. As applied force increases, the resistance decreases. This change is measured via the four-channel amplifier and analog-to-digital converter 500 and, in turn, digital signals are sent to at the microprocessor 502. Thus, force sensors 122, 322 determine the value of the force applied to the touch screen display 118.

A force applied to the touch-sensitive overlay 114 (or protective cover) of the touch screen display 118 by, for example, a user pressing down on the touch-sensitive overlay 114 for selection of a virtual button, key or other user-selectable feature, results in a force at the force sensors 322 as they are compressed between the touch-sensitive overlay 114 and the display 112. The force at each of the four force sensors 322 may differ depending on the location of the external applied force on the touch screen display 118. For example, a force applied at a first side of the touch screen display 118 results in a higher force measurement at the force sensor 322 nearest the first side than the force measurement at the force sensor 322 opposite the first side of the touch screen display 118.

The force-sensor 122, 322 is calibrated to determine the value of an applied force on the touch-sensitive overlay 114 of the touch screen display 118 that results in a force on the force sensors 322. The location of application of external force on the touch screen display is determined based on the relative force measurements determined from the changes in resistance at each of the force sensors 322. Thus, the value of an externally applied force on the touch-sensitive overlay 114 (or protective cover) is determined based on signals from the force sensors 322 and the location of application of the force on the touch screen display 118 is determined.

The mechanical work performed by the piezo disk actuators 312 is controlled to provide generally consistent force and movement of the touch screen display 118 in response to detection of an applied force on the touch screen display 118, for example, in the form of a touch. Fluctuations in mechanical work performed, for example, as a result of temperature variation, are reduced by adjusting the current to control the charge. Each piezoelectric disk 316 has similar electrical properties to a capacitor. The mechanical work performed (force * displacement) by the peizo disk actuator 312 is controlled by controlling the charge, expressed as:

$$Q_{piezo} = C_{piezo} * V_{piezo}$$

where:

Q is charge;
C is capacitance; and
V is voltage.

A coefficient, referred to as the D31 coefficient of a piezoelectric material composition provides the relationship between voltage and force. The D31 coefficient and the relative dielectric constant, Er, of a given piezoelectric material composition vary inversely with temperature. Therefore, if the charge of the piezoelectric disk 316 is controlled within a small range, the variance of the mechanical work of the piezo disk actuator 312 is small. The current may be controlled as the current flowing in or out of a capacitor, which has similar electrical properties to the piezoelectric disk 316, is given by:

$$I = C * dV/dt$$

where

I is current;
C is capacitance; and
dV/dt is differential voltage or instantaneous rate of voltage change. With I and dT held constant, as C decreases, dV increases. Thus, the charge is controlled because $Q_{piezo} = C_{piezo} * V_{piezo}$.

The microprocessor 502 controls the piezo driver 504 that controlls the current to the piezoelectric disks 316 and thereby controlls the charge. Increasing the charge increases the force on the touch screen display 118, in the direction away from the base 306, and decreasing the charge decreases the force on the touch screen display 118, permitting the touch screen display 118 to move toward the base 306. In the present example, each of the piezo disk actuators 312 are operably coupled to the microprocessor 502 through the piezo driver 504 and are all controlled substantially equally and concurrently. The piezo disk actuators 312 may be controlled separately.

The portable electronic device 100 is controlled generally by monitoring the touch screen display 118 for a touch event thereon, and adjusting a force on the touch screen display 118 that causes movement of the touch screen display 118 relative to the base 306 of the portable electronic device 100 in response to determination of a push on the touch screen display 118. The force is applied by at least one of the piezo disk actuators 312 in a single direction on the touch screen display 118.

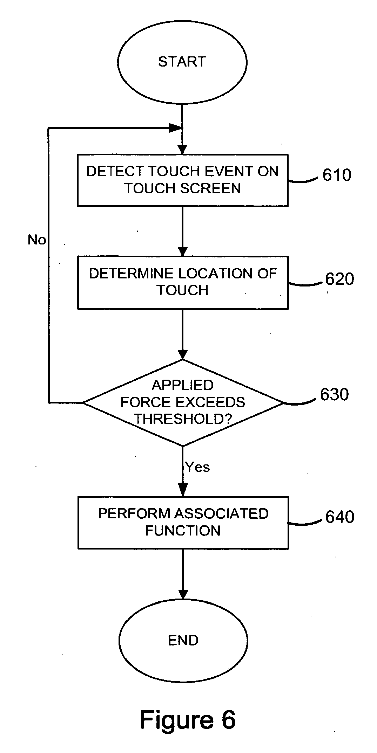

Reference is made to Figure 6 to describe a method of controlling a portable electronic device in accordance with one embodiment. The steps of Figure 6 may be carried out by routines or subroutines of software executed by, for example, the microprocessor 502 and the processor 102. Coding of software for carrying out such steps is well within the scope of a person of ordinary skill in the art given the present description.

The touch-sensitive overlay 114 of the touch screen display 118 detects 610 a touch event. The location of the touch on the touch-sensitive overlay 114 is determined 620. If the applied force on the touch screen display 118 does not exceed 630 a predetermined force, the process continues at step 610. If, however, the applied force on the touch screen display exceeds 630 the predetermined force, an associated function is performed 640, such as adjusting the charge at the piezo disk actuators 312 to simulate collapse of a dome-type switch and thereby provide the user with a positive tactile feedback. Further, a user-selection may be made if the location of touch corresponds with a user-selectable feature on the touch screen display 118. The process then ends

The flow-chart of Figure 6 is simplified for the purpose of explanation. A further touch event may be detected again and the steps repeated.

Continued reference is made to Figure 6 to describe an example of the method of controlling a portable electronic device in accordance with the present embodiment.

In the on or awake state of the portable electronic device 100, user-selectable features are displayed on the touch screen display 118. Such user-selectable features may include, for example, icons for selection of an application for execution by the processor 102, buttons for selection of user options, keys of a virtual keyboard, keypad or any other suitable user-selectable icons or buttons.

A touch on the touch screen display 118 is detected 610 as described with reference to the touch-sensitive overlay 114 as signals are generated as a result of capacitive coupling with the touch sensor layers. The touch is also detected by a change in the measured force on the touch screen display 118 as a result of the user pressing on the touch screen display 118 during selection of the user-selectable feature.

The location of the touch event is then determined 620 based on the signals generated as a result of capacitive coupling with the touch sensor layers of the touch-sensitive overlay 114. The location of application and value of force applied on the touch screen display 118 is confirmed based on the respective force measurements determined from the changes in resistance at each of the force sensors 322. The value of the applied force is determined at the microprocessor 502 from signals from the amplifier and four-channel analog to digital converter 500 operably coupled to each of the force sensors 322, and the location of application of force on the touch screen display 118 is determined 620 based on signals from the force sensors 322, confirming the location of the touch event determined from the signals generated from the touch-sensitive overlay 114.

A determination is then made whether or not the applied force exceeds a minimum threshold force. Thus, the value of the measured force at the force sensors 322 is compared to a threshold force and the touch event is confirmed to be a push if the value of the measured force exceeds 630 the threshold force. The threshold force may be any suitable threshold force, for example, for any of the force sensors or for an average of the force measured at the force sensors. Conversely, a touch event is not determined to be a push as a result of a relatively light touch or brush on the touch screen display 118 with a measured force that is lower than the threshold force. Further, if more than one touch location is determined, for example, as a result of pressing with one finger while a second finger lightly contacts the touch screen display 118, the location of the push is determined based on the applied force, thereby permitting determination of the touch location where greater force is applied to the touch screen display 118.

Thus, the touch screen display 118 is monitored and a push on the touch screen display 118 is detected. A touch is determined based on signals received from the touch-sensitive overlay 114 and is confirmed to be a push by determination of the value of an external applied force as a result of a user touch at the touch screen display 118 for selection of, for example, an internet browser application, an email application, a calendar application, or any other suitable application, option, or other feature within an application.

A function 640 based on the detected touch is carried out. The function carried out may be dependent on the location of touch on the touch screen display 118. For example, the charge at the piezo disk actuators 312 may be adjusted to simulate collapse of a dome-type switch, thereby providing the user with a positive tactile feedback. Further, a user-selection may be made if the location of touch corresponds with a user-selectable feature on the touch screen display 118.

As indicated, the charge at the piezo disk actuators 312 may be adjusted to simulate collapse of a dome-type switch. Thus, in response to determination that the applied force exceeds 630 the threshold force, a suitable current may be applied to the piezo disk actuators 312, ramping up the charge over a period of time, causing flexing of the piezo disk actuators 312, and the resulting force is applied to the touch screen display 118 through the support tray 308. In the present example, the force is applied by each piezo disk actuator 312 in the same direction, substantially perpendicularly away from the base 306. Each piezo disk actuator 312 applies the force to the touch screen display 118 in substantially the same direction each time a force is applied. The charge may be ramped up over a relatively long period of time so as not to provide tactile feedback to the user. Next there is a reduction in charge over a relatively very short period of time as compared to the ramp-up time. The charge is reduced by an applied discharge current to simulate the collapse of a dome-type switch, for example. The charge may also be increased over a relatively short period of time compared to the ramp up time, when the touch event ends, to thereby simulate release of the dome-type switch. The charge may be discharged over a suitable period of time.

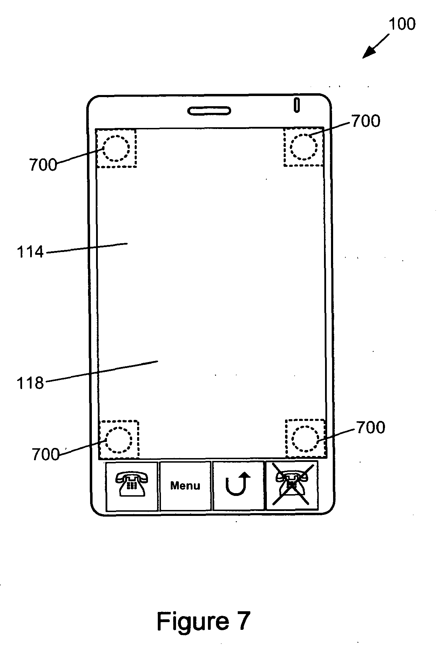

Reference is made to Figure 7, which shows a front view of an alternative portable electronic device. In this embodiment, the four force sensors 700 are disposed between the display 112 and the touch-sensitive overlay 114. Each of the force sensors 700 is located near a respective corner of the touch-sensitive overlay 114.

Each force sensor 700 is thin and is made of suitable material such as a pressure-sensitive ink disposed between substrate layers of polyester or polyimide film such as polyethylene terephthalate, as described above. The pressure-sensitive ink is printed on a conductive material, such as silver on the substrate layers, and the substrate layers are adhered together to provide a thin force-sensing resistor. Similar to the first-described example, the force sensors 700 act as force sensing resistors in an electrical circuit, and the resistance changes as the force applied to the sensor changes. With an increase in applied force, the resistance decreases and the change is measured.

The force-sensors 122 are calibrated to determine the value of a force applied on the touch-sensitive overlay 114 of the touch screen display 118 and resulting in a force on the force sensors 700. The location of application of external force on the touch screen display 118 is determined based on the respective force measurements determined from the changes in resistance at each of the force sensors 700. Thus, the value of an externally applied force on the touch-sensitive overlay 114 (or protective cover) is determined based on signals from the force sensors 700, and the location of application of the force on the touch screen display 118 is determined. A suitable force sensor 122, 322 in the present embodiment includes, for example, FlexiForce™ A201 force sensor. The operation of the force-sensors 700 is similar to that described above.

Alternatively, no actuator need be provided, and the force-sensor determines a location of an applied force (push) on the touch screen display.

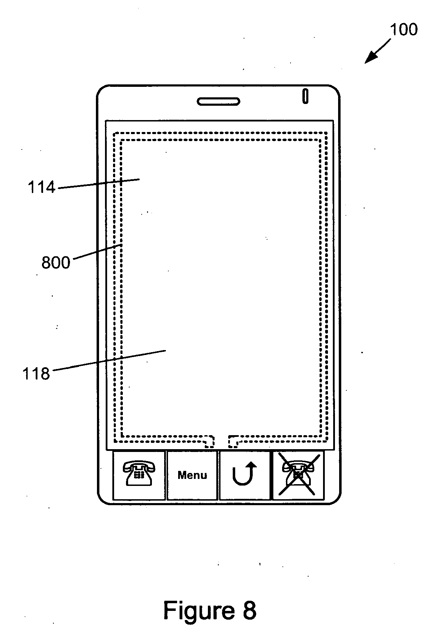

Referring to Figure 8, a front view of an alternative portable electronic device is shown according to another embodiment. In this embodiment, he force sensor 800 extends around a periphery of the touch-sensitive overlay 114, generally forming a ring. The force sensor 800 in this embodiment extends near each edge of the touch-sensitive overlay. As in the above-described embodiments, the force sensor 800 is disposed between the display and the touch-sensitive overlay 114.

The force sensor 800 is thin and is made of suitable material and arranged and calibrated as described above, for example, with respect to the force sensor 322, 700

Given the examples of Figure 8 and Figure 6, a touch on the touch screen display 118 is detected 610 as described with reference to the touch-sensitive overlay 114 as signals are generated as a result of capacitive coupling with the touch sensor layers. The touch is also detected by a change in the measured force on the touch screen display 118 as a result of the user pressing on the touch screen display 118 during selection of a user-selectable feature. The location of the touch event is determined 620 based on the signals generated as a result of capacitive coupling with the touch sensor layers of the touch-sensitive overlay 114.

A determination is made whether or not the applied force exceeds 630 a minimum threshold force based on the signals from the force sensor 800. Thus, the measured force at the force sensor 800 is compared to a threshold force, and the touch event is confirmed to be a push if the value of measured force is determined to exceed the threshold force, and a function is performed 640. The threshold force may be any suitable threshold force.

The force sensor 800 provides a seal and spacing between the display and the touch-sensitive overlay 114 and reduces deformation of the liquid crystal of the display caused by finger pressure transferred to the display through the touch-sensitive overlay 114.

In the above-described embodiments, each force sensor is described as being made of a suitable material such as a pressure-sensitive ink disposed between substrate layers of polyester or polyimide film such as polyethylene terephthalate. In alternative embodiments, each force sensor is a pressure-sensitive composite rubber such as an INASTOMER® material, available from INABA RUBBER CO., LTD. (IS THIS COMPANY's NAME SPELLED IN ALL CAPS?) The composite includes spherical conductive particles such as carbon molecules in an insulating matrix material such as a silicone. Measured resistance of such materials is inversely proportional to the applied pressure as applied pressure causes the distance between conductive particles to decrease resulting in the formation of conductive pathways through the material. In these embodiments, the pressure-sensitive composite rubber is disposed between, for example, a flex circuit with interlaced PCB traces and a protective layer. Again, the force sensor is disposed between the display and the touch-sensitive overlay while spacing the two apart. Any suitable number of force sensors and any suitable arrangement of the force sensor(s) may be used. As in the above-described embodiments, the force-sensor is calibrated to determine the value of an applied force on the touch-sensitive overlay of the touch screen display, which force results in a force detected by the force sensor.

Force sensors that determine the value of an externally applied force to a touch-sensitive display are useful for determining selection of a user-selectable feature on the display.

While the embodiments described herein are directed to particular implementations of the portable electronic device and the method of controlling the portable electronic device, modifications and variations may occur to those skilled in the art. All such modifications and variations are believed to be within the sphere and scope of the present disclosure. The described embodiments are to be considered in all respects only as illustrative and not restrictive. The scope of the disclosure is, therefore, indicated by the appended claims rather than by the foregoing description.

**Claims**

1. A touch screen display (118) comprising:

   a display (112);
   a touch-sensitive overlay (114) disposed on the display (32) and a controller (116) operably coupled to the touch-sensitive overlay (114); and
   a force sensor (122, 800) disposed between the display (118) and the touch-sensitive overlay (114) and extending around a periphery of the touch-sensitive overlay (114) to provide a seal between the touch-sensitive overlay (114) and the display (112) and arranged and constructed to determine a value of an applied force to the touch-sensitive overlay (114).

2. The touch screen display according to claim 1, wherein the force sensor (800) comprises a pressure sensitive adhesive.

3. The touch screen display according to claim 2, wherein the pressure-sensitive adhesive comprises a pressure-sensitive material disposed between layers of substrate (326) and adhered to the touch-sensitive overlay (114) and the display (112).

4. A touch screen display (118) comprising:

   a display (112);
   a touch-sensitive overlay (114) disposed on the display (32) and a controller (116) operably coupled to the touch-sensitive overlay (114);
   a plurality of force sensors (122, 322) comprising a substrate (326) between the display (118) and the touch-sensitive overlay (114), wherein the substrate (326) and adhesive extend continuously around a periphery of the touch-sensitive overlay (114) to provide a seal between the touch-sensitive overlay (114) and the display (112):

5. The touch screen display according to claim 4, wherein the force sensor (122, 322) comprises a pressure sensitive adhesive.

6. The touch screen display according to claim 5, wherein the pressure-sensitive adhesive comprises a pressure-sensitive material disposed between layers of the substrate (326).

7. The touch screen display (118) according to claim 3 or claim 6, wherein the layers of substrate (326) comprise layers of polyethylene terephthalate.

8. The touch screen display (118) according to claim 6, wherein the pressure-sensitive material (324) comprises a pressure-sensitive ink.

9. The touch screen display (118) according to claim 1, wherein the force sensor (122, 322) comprises a pressure-sensitive composite elastomer.

10. The touch screen display (118) according to any one of claims 4 to 8, further comprising additional force sensors (122, 322, 700, 800) such that each force sensor (122, 322, 700, 800) is disposed near each edge of the touch-sensitive overlay (114).

11. The touch screen display (118) according to any preceding claim, further comprising an analog-to-digital converter (500) operably coupled to the force sensor (122, 322).

12. A portable electronic device (100) comprising:

    a housing (200);
    a touch screen display (118) in accordance with any preceding claim; and
    a memory (108, 110) and a processor (102) operably coupled to the memory (108, 110), and the touch screen display (118).

13. The portable electronic device according to claim 12, further comprising a piezo actuator (312) disposed between the touch screen display (118) and a base (306) of the portable electronic device (100) for applying a force to the touch screen display (118) In response to an external applied force on the touch screen display (118) that exceeds a threshold force.

**Patentansprüche**

1. Eine Berührungsbildschirmanzeige (118), die aufweist:

   eine Anzeige (112);
   eine berührungsempfindliche Überlagerung (114), die auf der Anzeige (32) angeordnet ist, und eine Steuervorrichtung (116), die betriebsfähig mit der berührungsempfindlichen Überlagerung (114) gekoppelt ist; und
   einen Kraftsensor (122, 800), der zwischen der Anzeige (118) und der berührungsempfindlichen Überlagerung (114) angeordnet ist und sich entlang einer Peripherie der berührungsempfindlichen Überlagerung (114) erstreckt, um eine Dichtung zwischen der berührungsempfindlichen Überlagerung (114) und der Anzeige (112) vorzusehen, und der ausgebildet und konstruiert ist, um einen Wert einer angewendeten Kraft auf die berührungsempfindliche Überlagerung (114) zu bestimmen.

2. Die Berührungsbildschirmanzeige gemäß Anspruch 1, wobei der Kraftsensor (800) einen druckempfindlichen Klebstoff aufweist.

3. Die Berührungsbildschirmanzeige gemäß Anspruch 2, wobei der druckempfindliche Klebstoff ein druckempfindliches Material aufweist, das zwischen Schichten von Substrat (326) angeordnet ist und an der berührungsempfindlichen Überlagerung (114) und der Anzeige (112) anhaftet.

4. Eine Berührungsbildschirmanzeige (118), die aufweist:

eine Anzeige (112);
eine berührungsempfindliche Überlagerung (114), die auf der Anzeige (32) angeordnet ist, und eine Steuervorrichtung (116), die betriebsfähig mit der berührungsempfindlichen Überlagerung (114) gekoppelt ist;
eine Vielzahl von Kraftsensoren (122, 322), die ein Substrat (326) zwischen der Anzeige (118) und der berührungsempfindlichen Überlagerung (114) aufweisen, wobei das Substrat (326) und der Klebstoff sich kontinuierlich um eine Peripherie der berührungsempfindlichen Überlagerung (114) erstrecken, um eine Dichtung zwischen der berührungsempfindlichen Überlagerung (114) und der Anzeige (112) vorzusehen.

5. Die Berührungsbildschirmanzeige gemäß Anspruch 4, wobei der Kraftsensor (122, 322) einen druckempfindlichen Klebstoff aufweist.

6. Die Berührungsbildschirmanzeige gemäß Anspruch 5, wobei der druckempfindliche Klebstoff ein druckempfindliches Material aufweist, das zwischen Schichten des Substrats (326) angeordnet ist.

7. Die Berührungsbildschirmanzeige (118) gemäß Anspruch 3 oder Anspruch 6, wobei die Schichten von Substrat (326) Schichten aus Polyethylenterephthalat aufweisen.

8. Die Berührungsbildschirmanzeige (118) gemäß Anspruch 6, wobei das druckempfindliche Material (324) eine druckempfindliche Tinte aufweist.

9. Die Berührungsbildschirmanzeige (118) gemäß Anspruch 1, wobei der Kraftsensor (122, 322) ein druckempfindliches Komposit-Elastomer aufweist.

10. Die Berührungsbildschirmanzeige (118) gemäß einem der Ansprüche 4 bis 8, die weiter zusätzliche Kraftsensoren (122, 322, 700, 800) aufweist derart, dass jeder Kraftsensor (122, 322, 700, 800) in der Nähe jedes Rands der berührungsempfindlichen Überlagerung (114) angeordnet ist.

11. Die Berührungsbildschirmanzeige (118) gemäß einem vorhergehenden Anspruch, die weiter einen Analog-zu-Digital-Wandler (500) aufweist, der betriebsfähig mit dem Kraftsensor (122, 322) gekoppelt ist.

12. Eine tragbare elektronische Vorrichtung (100), die aufweist:

ein Gehäuse (200);
eine Berührungsbildschirmanzeige (118) in Übereinstimmung mit einem vorhergehenden Anspruch; und
einen Speicher (108, 110) und einen Prozessor (102), der betriebsfähig mit dem Speicher (108, 110) und der Berührungsbildschirmanzeige (118) gekoppelt ist.

13. Die tragbare elektronische Vorrichtung gemäß Anspruch 12, die weiter einen Piezoaktuator (312) aufweist, der zwischen der Berührungsbildschirmanzeige (118) und einer Basis (306) der tragbaren elektronischen Vorrichtung (100) angeordnet ist, zum Anwenden einer Kraft auf die Berührungsbildschirmanzeige (118) in Reaktion auf eine externe angewandte Kraft auf der Berührungsbildschirmanzeige (118), die eine Schwellenkraft übersteigt.

**Revendications**

1. Dispositif d'affichage à écran tactile (118), comprenant :

un dispositif d'affichage (112) ;
une couche de revêtement sensible au toucher (114) disposée sur le dispositif d'affichage (32) et un dispositif de commande (116) couplé de façon fonctionnelle à la couche de revêtement sensible au toucher (114) ; et
un capteur de force (122, 800) disposé entre le dispositif d'affichage (118) et la couche de revêtement sensible au toucher (114), et s'étendant autour de la périphérie de la couche de revêtement sensible au toucher (114) de façon à réaliser un joint d'étanchéité entre la couche de revêtement sensible au toucher (114) et le dispositif d'affichage (112), et agencé et construit de façon à déterminer une valeur d'une force appliquée à la couche de revêtement sensible au toucher (114).

2. Dispositif d'affichage à écran tactile selon la revendication 1, dans lequel le capteur de force (800) comprend un adhésif sensible à la pression.

3. Dispositif d'affichage à écran tactile selon la revendication 2, dans lequel l'adhésif sensible à la pression comprend un matériau sensible à la pression disposé entre des couches d'un substrat (326) et adhérant à la couche de revêtement sensible au toucher (114) et au dispositif d'affichage (112).

4. Dispositif d'affichage à écran tactile (118), comprenant :

   un dispositif d'affichage (112) ;
   une couche de revêtement sensible au toucher (114) disposée sur le dispositif d'affichage (32) et un dispositif de commande (116) couplé de façon fonctionnelle à la couche de revêtement sensible au toucher (114) ;
   une pluralité de capteurs de force (122, 322) comprenant un substrat (326) entre le dispositif d'affichage (118) et la couche de revêtement sensible au toucher (114), le substrat (326) et l'adhésif s'étendant de façon continue autour d'une périphérie de la couche de revêtement sensible au toucher (114) de façon à produire un joint d'étanchéité entre la couche de revêtement sensible au toucher (114) et le dispositif d'affichage (112).

5. Dispositif d'affichage à écran tactile selon la revendication 4, dans lequel le capteur de force (122, 322) comprend un adhésif sensible à la pression.

6. Dispositif d'affichage à écran tactile selon la revendication 5, dans lequel l'adhésif sensible à la pression comprend un matériau sensible à la pression disposé entre des couches du substrat (326).

7. Dispositif d'affichage à écran tactile (118) selon la revendication 3 ou la revendication 6, dans lequel les couches du substrat (326) comprennent des couches de poly(téréphthalate d'éthylène).

8. Dispositif d'affichage à écran tactile (118) selon la revendication 6, dans lequel le matériau sensible à la pression (324) comprend une encre sensible à la pression.

9. Dispositif d'affichage à écran tactile (118) selon la revendication 1, dans lequel le capteur de force (122, 322) comprend un élastomère composite sensible à la pression.

10. Dispositif d'affichage à écran tactile (118) selon l'une quelconque des revendications 4 à 8, comprenant de plus des capteurs de force additionnels (122, 322, 700, 800), de telle sorte que chaque capteur de force (122, 322, 700, 800) soit disposé près de chaque bord de la couche de revêtement sensible au toucher (114).

11. Dispositif d'affichage à écran tactile (118) selon l'une quelconque des revendications précédentes, comprenant de plus un convertisseur analogique/numérique (500) couplé de façon fonctionnelle au capteur de force (122, 322).

12. Dispositif électronique portable (100), comprenant :

    un boîtier (200) ;
    un dispositif d'affichage à écran tactile (118) selon l'une quelconque des revendications précédentes ; et
    une mémoire (108, 110) et un processeur (102) couplé de façon fonctionnelle à la mémoire (108, 110), et au dispositif d'affichage à écran tactile (118).

13. Dispositif électronique portable selon la revendication 12, comprenant de plus un piézo-actionneur (312) disposé entre le dispositif d'affichage à écran tactile (118) et une base (306) du dispositif électronique portable (100) pour appliquer une force au dispositif d'affichage à écran tactile (118) en réponse au dépassement d'une force de seuil par une force appliquée de l'extérieur sur le dispositif d'affichage à écran tactile (118).

Figure 1

100

200

118

Menu

202    204    206    208

Figure 2

Figure 3A

Figure 3B

Figure 3C

Figure 4

Figure 5

Figure 6

Figure 7

100

114

800

118

Menu

Figure 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006279548 A
- WO 03083635 A